# EUROPEAN PATENT SPECIFICATION

(11) **EP 4 258 651 B1**
(45) Date of publication and mention of the grant of the patent: **31.01.2024**
(21) Application number: 22166796.7
(22) Date of filing: 05.04.2022
(51) Int. Cl.: H04N 25/30, H04N 25/683, G06T 5/00, G06T 5/50

(54) **X-RAY DETECTING SYSTEM**
RÖNTGENSTRAHLENDETEKTIONSSYSTEM
SYSTÈME DE DÉTECTION DE RAYONS X

(43) Date of publication of application: 11.10.2023
(73) Proprietor: Teledyne Dalsa B.V., 5656 AE Eindhoven (NL)
(72) Inventor: DILLEN, Bartholomeus Goverdina Maria Henricus, 5656 AE Eindhoven (NL); MILLER, James Joseph, 5656 AE Eindhoven (NL)
(74) Representative: Arnold & Siedsma

(56) References cited:
- EP-A2- 0 998 138
- WO-A1-2010/131547
- US-A1- 2004 200 969
- US-A1- 2013 259 356
- US-A1- 2014 219 422
- US-B1- 6 497 511

## Description

### FIELD

Aspects of the present disclosure relate to an X-ray detecting system. Further aspects of the present disclosure relate to an X-ray system comprising the X-ray detecting system, and to an X-ray detection method. Aspects of the present disclosure particularly relate to X-ray applications in which both the X-ray source and X-ray detector have a fixed position relative to the object that is being imaged. Examples of such applications are mammography, chest-x-ray, intra- and extra-oral dental x-ray, and fluoroscopy.

### BACKGROUND

X-ray detecting systems are known in the art. An example of such a system is disclosed in US9897707B2. This system comprises an X-ray detector that comprises a fiber optic plate having a first surface and an opposing second surface. On the first surface, a scintillator is arranged for converting incoming X-ray photons into visible light photons. A semiconductor substrate is coupled to the second surface. On the semiconductor substrate, a complementary metal-oxide-semiconductor, CMOS, pixel array is arranged that comprises a matrix of rows and columns of pixels. In addition, CMOS readout circuitry is arranged on the semiconductor substrate for reading out pixel signals of the CMOS pixel array. Typically, the rows of the matrix of pixels are sequentially addressed for read out such that the CMOS readout circuitry reads out the pixel signals corresponding to an entire row of pixels at a time. The pixel signals are processed by a processing unit that generates an X-ray image based on the pixel signals.

X-ray photons that fall onto the X-ray detector are converted by the scintillator into one or more visible light photons. These photons pass through the fiber optic plate and fall onto the CMOS pixel array. Each pixel comprises a photosensitive element, such as a photodiode, that generates a photocurrent when absorbing the visible light photons. This current is stored in a storage capacitor inside the pixel. When the pixel is addressed for read out, the voltage over the storage capacitor is read out.

The pixel stores the charge associated with the generated photocurrent in the storage capacitor during an integration period. After this period, the pixel is read out and the voltage over the capacitor is reset. Hereinafter, the collection of pixel values associated with the pixels of the pixel array generated based on the pixel signals of the pixel array obtained during a single integration period is referred to as a frame.

Different pixel topologies are known in the art. For example, in a 3T layout, comprising three CMOS transistors, a transistor is used for resetting the voltage over the storage capacitor, a transistor is used for selecting the pixel for read out, and a transistor is used for buffering the voltage over the storage capacitor. In a 4T layout, a pinned photodiode is used in combination with a floating diffusion node. A first transistor is used for transferring the charge in the floating diffusion node to the storage capacitor, a transistor is used for resetting the voltage over the storage capacitor, a transistor is used for selecting the pixel for read out, and a transistor is used for buffering the voltage over the storage capacitor. Aspects of the present disclosure relate to these pixel topologies. However, the present disclosure is not limited to these topologies.

As described above, X-ray photons are converted into visible light photons that are detected by the CMOS pixel array. However, not all the incident X-ray photons are converted by the scintillator. If X-ray photons would directly fall onto the CMOS pixel array, a photocurrent would be induced that would be higher than the photocurrent that would have been generated if the X-ray photons would have been converted in visible light photons by the scintillator.

To prevent a situation in which both visible light photons and X-ray photons fall onto the CMOS pixel array, a fiber optic plate is used. This plate shields the CMOS pixel array against X-ray photons directly hitting the CMOS pixel array. Unfortunately, fiber optic plates are rather costly components.

US6497511B1 discloses a method for imaging in digital dental radioscopy making use of a sensor array, the individual image elements of which are smaller than a desired local resolution so that a plurality of image elements forms a respective effective image element, first reference signals, which are generated by the image elements of the sensor array when said sensor array is not exposed to X-radiation, are initially detected. In addition, second reference signals, which are generated by the image elements of the sensor array when said sensor array is exposed to X-radiation, are detected. Subsequently, defective image elements are determined on the basis of the detected first and second reference signals, whereupon an image of an object is produced using exclusively the image elements that have been determined as being non-defective. Furthermore, during production of the image of an object, it can be determined for the object signals detected for the respective image elements whether said image elements have been hit directly by an X-ray quantum. Image elements that have been hit directly by an X-ray quantum are not used for producing the image of the object.

US20140219422A1 discloses an X-ray detecting system that comprises a flat panel detector, FPD, that has a plurality of pixels, in which signal electric charges corresponding to amounts of X-rays incident are accumulated, and that is capable of nondestructively reading data which indicates the X-ray image. The system further comprises an amplifier that amplifies a signal sent from the FPD and has a variable gain, an evaluation value calculation section that obtains an evaluation value for evaluating the X-ray image, and a gain adjustment section that calculates a new gain of the amplifier used at the time of rereading. The gain of the amplifier is changed to a value of a new gain which is calculated by the gain adjustment section, and the X-ray image is reread.

Aspects of the present disclosure relate to an X-ray detecting system that is capable of operating without a fiber optic plate.

According to an aspect of the present disclosure this object is achieved using the X-ray detecting system as defined in claim 1. The readout circuitry of this system is configured for acquiring a plurality of frames related to a single X-ray exposure. Furthermore, the processing unit comprises a frame summing unit configured to, for a pixel of the pixel array, compare the pixel values of the acquired frames that correspond to that pixel for detecting a pixel value in those frames that was adversely affected by a direct hit of that pixel by an X-ray photon during the single exposure. The frame summing unit is further configured to generate a pixel value for that pixel in dependence of the pixel values of the acquired frames and the detected pixel value for that pixel. It should be noted that it is possible that multiple pixel values are detected for a single pixel in a single exposure.

Because the X-ray detecting system does not comprise a fiber optic plate, the pixel array will encounter direct hits by X-ray photons. These direct hits distort the final X-ray image. For example, as a result of a direct hit, a pixel may saturate fully or more quickly than if the X-ray photon would have been converted by the scintillator. For example, direct hits may show up as overly bright pixels.

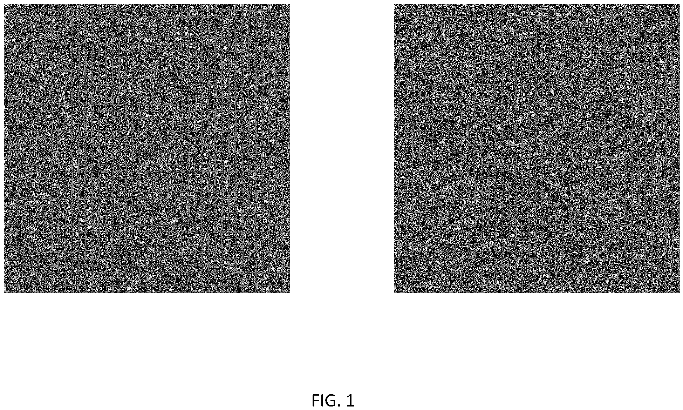

Figure 1 illustrates a comparison between an X-ray image obtained using a blank irradiation, in which every pixel is ideally subjected to the same X-ray radiation, for an X-ray detecting system with (left) and without (right) a fiber optic plate.

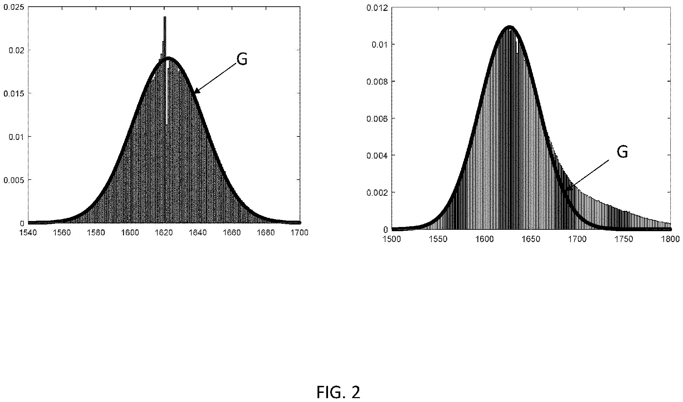

The X-ray source emits X-ray photons of which the energy distribution corresponds to a Gaussian distribution. Figure 2 shows the histograms corresponding to the X-ray images of figure 1. In these histograms, a count value is indicated as a function of the pixel value expressed as a digital number. As shown in the histogram on the left, corresponding to the X-ray image obtained using an X-ray detecting system with fiber optic plate, the energy distribution of the detected photons follows that of a Gaussian distribution described by Gaussian curve G. However, for the histogram on the right, corresponding to the X-ray image obtained using an X-ray detecting system without fiber optic plate, the energy distribution of the detected photons shows a high-intensity tail that falls outside of the Gaussian curve G. This tail corresponds to the bright pixels in the X-ray image shown on the right in figure 1.

As shown in figure 1, most of the pixels do not suffer from direct hits. Still, the overall image quality is deteriorated as still a significant number of pixels is affected. According to aspects of the present disclosure, instead of using a single integration period yielding a single frame, it is proposed to acquire multiple frames and to compare these frames to detect for the presence of direct hits.

As the integration period is reduced compared to a detecting system that uses a single frame for generating an X-ray image, the storage capacitance in the pixels can be reduced. This makes the pixel more sensitive for direct hits enabling the frame summing unit to more easily determine whether a pixel has encountered a direct hit. For example, consider a system in which the pixels each have storage capacitance C1 and in which a single frame is obtained using an integration period t1. During the integration period, N1 visible light photons fall onto each pixel, and during the entire exposure a pixel encounters a single direct hit. In this case, the voltage over the storage capacitance in the pixel equals (a1 x N1 + a2)/C1 or (a1 x N1 )/C1 depending on whether a direct hit was detected by the pixel or not, wherein a1 is a factor describing the contribution to the charge stored on the storage capacitor of a single visible light photon being detected, and a2 is a factor describing the contribution to the charge stored on the storage capacitor of a single X-ray photon being detected. For convenience, it is assumed that the pixel is not saturated in both cases.

Now, consider a consider a system in which the pixels each have storage capacitance C1/M and in which M frames are obtained using an integration period t1/M. The same exposure settings are used as in the previous example and the time associated with reading out and resetting a pixel are neglected. In that case, the dose detected by the pixel array is the same in both examples and at the end of an integration period the voltage over the storage capacitance equals (a1 x N1/M + a2)/C1/M = a1N1/C1 + Ma2/C1 or (a1 x N1/M)/C1/M = a1N1/C1, depending on whether or not in that frame a direct hit was detected.

For the first system, the ratio between the voltage of a pixel affected and not affected by a direct hit is (a1 x N1 + a2)/C1 divided by (a1 x N1)/C1 equaling 1 + a2/(N1a1), whereas for the second system this ratio equals a1N1/C1 + Ma2/C1 divided by a1N1/C1 equaling 1 + Ma2/(N1a1). Hence, for the system using multiple frames, pixels affected by a direct hit can more easily be identified by comparing pixel values corresponding to the same pixel in various frames.

Using M frames, M pixel values are available for each pixel. Using the increased detectability of pixels affected by a direct hit, the pixel value affected by a direct hit can be filtered out or somehow be accounted for when generating the final X-ray image.

For example, the frame summing unit can be configured to detect the pixel value that is adversely affected by a direct hit by determining, for that pixel, a median value of the pixel values of the acquired frames, and to determine that a pixel value among the pixel values of the acquired frames is adversely affected if that pixel value deviates more than a first threshold from the determined median value. Furthermore, the frame summing unit can be configured to discard the detected pixel value when generating the pixel value for that pixel. As an example, if the digital numbers corresponding to the pixel values of a given pixel in the different frames are 100, 110, 120, 115, 200, and the first threshold equals 30, the value 200 can be discarded and the pixel value for that pixel used for constructing the final X-ray image can be taken as the average of the remaining pixel values. Instead, the frame summing unit can be configured to replace the detected pixel value with the determined median value when combining the pixel values of the acquired frames to generate the pixel value for that pixel. Using the example above the value 200 would be replaced by the value 115, and the pixel value for the pixel used for constructing the final X-ray image can be taken as the average of the pixel values 100, 110, 120, 115, 115.

Alternatively, the frame summing unit can be configured to detect the pixel value by determining, for that pixel, an average value of the pixel values of the acquired frames, and to determine that a pixel value among the pixel values of the acquired frames is adversely affected if that pixel value deviates more than a second threshold from the average value. Furthermore, the frame summing unit can be configured to discard the detected pixel value when generating the pixel value for that pixel. As an example, if the digital numbers corresponding to the pixel values of a given pixel in the different frames are 100, 110, 120, 110, 200, and the second threshold equals 30, the value 200 can be discarded and the pixel value for that pixel used for constructing the final X-ray image can be taken as the average of the remaining pixel values. Instead, the frame summing unit can be configured to replace the detected pixel value with the determined average value when combining the pixel values of the acquired frames to generate the pixel value for that pixel. Using the example above the value 200 would be replaced by the value 128, and the pixel value for the pixel used for constructing the final X-ray image can be taken as the average of the pixel values 100, 110, 120, 110, 128.

In the above, the process of detecting a pixel value that has been adversely affected has been described for a single pixel. However, the frame summing unit can be configured to perform the steps of comparing the pixel values of the acquired frames that correspond to a given pixel and generating a pixel value for that given pixel for a plurality of pixels of the pixel array, preferably for all the pixels of the pixel array.

The processing unit may comprise an image generating unit for generating an X-ray image based on the generated pixel values for the pixels of the pixel array. The frame summing unit and/or the image generating unit may be part of the X-ray detector.

The pixel array may comprise active pixels, preferably pixels having a 3T or 4T layout although other pixel topologies may be possible. Additionally or alternatively, the present disclosure may relate to CMOS pixel arrays on Silicon substrates although other transistor technologies and/or semiconductor materials are not excluded.

The X-ray detecting system may further comprise a carrier having a first surface and an opposing second surface, a scintillator arranged on the first surface of the carrier, and a semiconductor substrate attached to the second surface of the carrier on which substrate the pixel array and the readout circuitry are integrated. The carrier is preferably made of one or more materials out of the group consisting of aluminum, amorphous carbon, and other light flexible organic substrate such as Kapton or PET. An absorption coefficient for X-ray radiation having an energy within a range between 20 and 150 keV may lie in a range between 0.01 and 4 cm²/mg. It may equally be possible to arrange the scintillator on the same surface of the carrier as the surface to which the semiconductor substrate is attached.

The frame summing unit can be integrated on the semiconductor substrate. In some embodiments, part of the processing unit may be integrated on the semiconductor substrate and part of the processing unit may be embodied separate from the semiconductor substrate.

According to aspect of the present disclosure, an X-ray system is provided that comprises an X-ray source, and the X-ray detecting system described above. The pixels of the pixel array can be active pixels that each have a storage capacity. Furthermore, the X-ray system can be operable in a first operational mode in which mode the X-ray source is configured to emit X-rays using a dose rate in a range between .01 and 10 mGy in a single exposure, wherein an integration time of the pixel array is such that a maximum filling level of the storage capacity stays between 1% and 50% percent during said single exposure and such that the number of acquired frames exceeds 1, more preferably 4.

The skilled person will readily understand that if the absorption coefficient of the carrier for X-rays decreases, direct hits will occur more often. Preferably, the number of frames, and therefore the integration period, is chosen such that an average number of direct hits during a single exposure is significantly less than the number of frames. In that case, it can be ensured that pixel values that were adversely affected can be compensated for using pixel values from other frames that were not adversely affected. The chances of a direct hit occurring may depend on various factors such as the type of semiconductor substrate, the type of material of the carrier, the thickness of the carrier, the energy and energy distribution of the X-ray radiation etc.

According to aspect of the present disclosure, an X-ray detection method is provided that comprises emitting X-rays to an object, converting X-rays having passed through the object into visible light, and detecting the visible light using a pixel array while X-rays generate direct hits in the pixel array by acquiring multiple frames during a single X-ray exposure.

The method further comprises, for a pixel of the pixel array, comparing pixel values of the acquired frames that correspond to that pixel for detecting a pixel value in those frames that was adversely affected by a direct hit of that pixel by an X-ray photon during the single exposure, and generating a pixel value for that pixel in dependence of the pixel values of the acquired frames and the detected pixel value for that pixel.

Detecting the pixel value may comprise determining, for that pixel, a median value of the pixel values of the acquired frames, and determining that a pixel value among the pixel values of the acquired frames is adversely affected if that pixel value deviates more than a first threshold from the determined median value. Furthermore, the method may optionally further comprise discarding the detected pixel value when generating the pixel value for that pixel, or replacing the detected pixel value with the determined median value when combining the pixel values of the acquired frames to generate the pixel value for that pixel.

Alternatively, detecting said pixel value may comprise determining, for that pixel, an average value of the pixel values of the acquired frames, and determining that a pixel value among the pixel values of the acquired frames is adversely affected if that pixel value deviates more than a second threshold from the determined average value. Furthermore, the method optionally further comprises discarding the detected pixel value when generating the pixel value for that pixel, or replacing the detected pixel value with the determined average value when combining the pixel values of the acquired frames to generate the pixel value for that pixel.

The method may comprise performing the steps of comparing the pixel values of the acquired frames that correspond to a given pixel and generating a pixel value for that given pixel for a plurality of pixels of the pixel array, preferably for all the pixels of the pixel array. The method may optionally further comprise generating an X-ray image based on the generated pixel values for the pixels of the pixel array.

### DESCRIPTION OF THE DRAWINGS

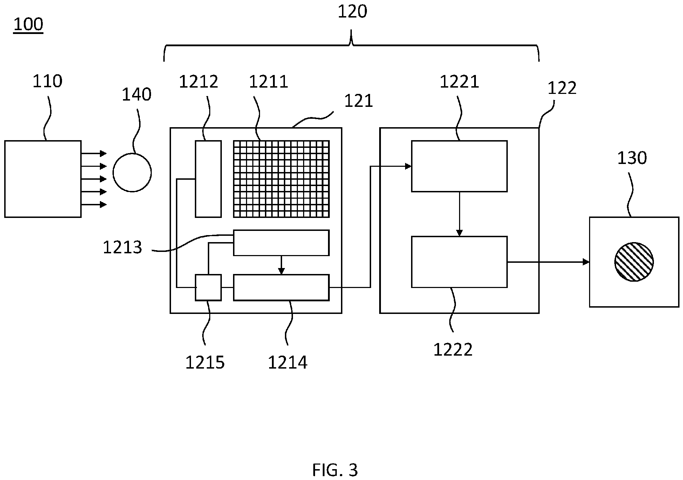

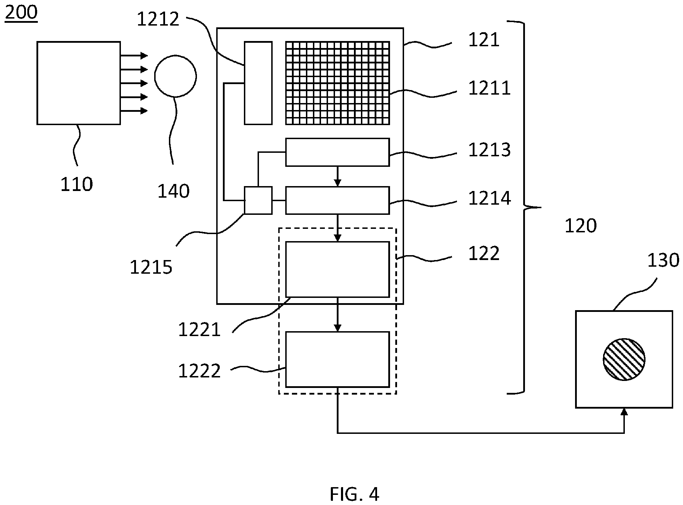

So that the manner in which the features of the present disclosure can be understood in detail, a more particular description is made with reference to embodiments, illustrated in appended figures 3 and 4. It is to be noted, however, that indicated figures illustrate only typical embodiments and are therefore not to be considered limiting of its scope. The figures are for facilitating an understanding of the disclosure and thus are not necessarily drawn to scale.

Advantages of the subject matter claimed will become apparent to those skilled in the art upon reading this description in conjunction with the accompanying figures, in which like reference numerals have been used to designate like elements, and in which:
Figure 1 illustrates a comparison between X-ray images obtained using an X-ray detecting system with and without a fiber optic plate;
Figure 2 illustrates histograms corresponding to the X-ray images of figure 1;
Figure 3 illustrates an embodiment of an X-ray system in accordance with an aspect of the present disclosure;
Figure 4 illustrates a further embodiment of an X-ray system in accordance with an aspect of the present disclosure;
Figures 5-6 illustrate different methods for generating an X-ray image from a plurality of frames; and
Figure 7 illustrates an exploded view of an X-ray detector without a fiber optic plate, used in the present invention.

Figure 3 illustrates an embodiment of an X-ray system 100 in accordance with an aspect of the present disclosure. It comprises an X-ray source 110 and an X-ray detecting system 120. In the embodiment shown in figure 3, X-ray detecting system 120 comprises an X-ray detector 121 and a processing unit 122 that are embodied as separate units. X-ray detector 121 comprises a CMOS pixel array 1211 that is integrated on a Silicon substrate. On that same substrate, selecting circuitry 1212 is arranged for selecting a row of pixels of pixel array 1211 to be read out. In addition, the semiconductor substrate comprises readout circuitry 1213 for reading out the pixel signals from selected pixels of pixel array 1211, and a frame generating unit 1214 that generates a frame based on the pixel signals from pixel array 1211. Typically, readout circuitry 1213 converts the pixel signals of a row of pixels into corresponding digital numbers. The frame generated by frame generating unit 1214 then comprises a digital number for each of the pixels in pixel array 1211. The semiconductor substrate further comprises a controller 1215 for controller selecting circuitry 1212, readout circuitry 1213, and frame generating unit 1214.

Processing unit 122 comprises a frame summing unit 1221 and an X-ray image generating unit 1222. Frame summing unit 1221 receives the frames generated by frame generating unit 1214 and outputs a single frame comprising a pixel value for each pixel of the pixel array 1211 based on the frames received from frame generating unit 1214. X-ray image generating unit 1222 generates an X-ray image 130 based on the frame outputted by frame summing unit 1221.

In the embodiment in figure 3, an object 140 is arranged in between X-ray source 110 and X-ray detecting system 120. This object is visible in X-ray image 130.

Figure 4 illustrates a further embodiment of an X-ray system 200 in accordance with an aspect of the present disclosure. This embodiment differs from the embodiment shown in figure 3 in that frame summing unit 1221 is now integrated on the same semiconductor substrate as pixel array 1211. As such, processing unit 122 is distributed over several subsystems.

It is noted that most X-ray detecting systems use multiple semiconductor substrates on which respective pixel arrays are integrated. These substrates are referred to as tiles and in such cases X-ray image generating unit 1222 generates an X-ray image based on the pixel values for all pixels of all tiles. Hence, when using multiple tiles, X-ray image generating unit is typically arranged separate from the semiconductor substrates on which the pixel arrays are integrated. However, the various frame summing units may still be integrated on the same substrates as the pixel arrays. In such case, X-ray image generating unit receives partial frames and constructs the X-ray image based on the partial frames. In other embodiments, a single frame summing unit is used that receives the partial frames from the various tiles and generates a single frame that is provided to the X-ray image generating unit. Additionally or alternatively, the frame summing unit may be part of the X-ray detector. In other embodiments, the frame summing unit and the image generating unit are arranged separate from the X-ray detector.

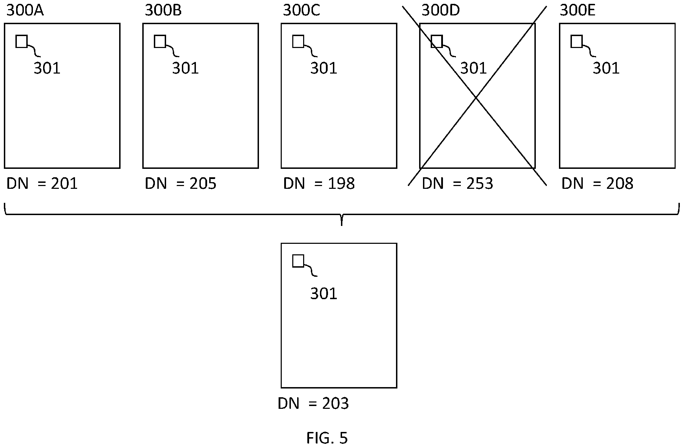

Figures 5-6 illustrate different methods for generating an X-ray image from a plurality of frames. In figure 5, the frame summing unit has received five frames 300A-300E that correspond to a single exposure. Each frame comprises pixel values corresponding to each pixel of the pixel array. These pixel values are indicated as digital numbers, DN. For example, frame 300A comprises a digital number equal to 201 corresponding to a pixel 301 of the pixel array. It is noted that figure 5 illustrates the position of pixel 301 in the corresponding pixel array.

The median value for pixel 301 among frames 300A-300E equals 205. Assuming that a threshold of 30 is used, it can be determined that the pixel value for pixel 301 in frame 300D deviates more than the threshold from the median value, i.e. 253-30 > 205. As such, this pixel value is detected as a pixel value that was adversely affected by a direct hit of pixel 301 by an X-ray photon during the exposure.

Next, the frame summing unit generates a single frame of which the pixel value for pixel 301 is computed by averaging the other pixel values for pixel 301, i.e. (201+205+198+208)/4=203. This process is performed for each pixel of the pixel array. If multiple tiles are used, the frame summing process described above can be performed independently for each tile, after which the various generated subframes are combined either by a dedicated subframe combining unit or by the X-ray image generating unit. The former subframe combining unit could be part of the X-ray detector. Alternatively, a single frame summing unit first combines the various subframes from the various tiles before performing the frame summing process.

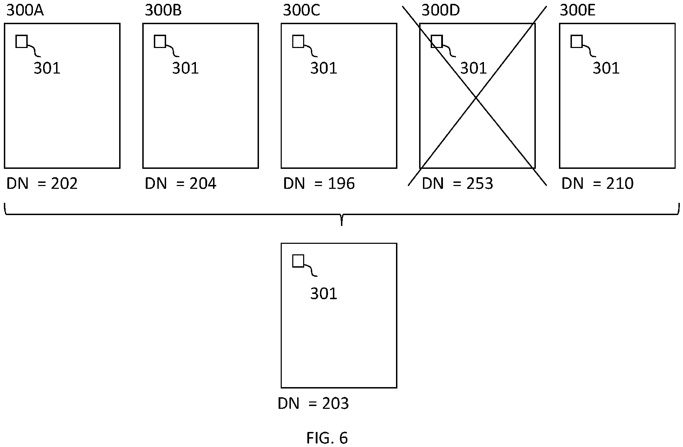

Figure 6 illustrates a different frame summing process. Compared to the process illustrated in figure 5, pixel values are now not compared to a median value but to an average value. For the values shown in figure 6, the average value can be computed to be (202+204+196+253+210)/5=213. Assuming that a threshold of 35 is used, it can be determined that the pixel value for pixel 301 in frame 300D deviates more than the threshold from the average value, i.e. 253-35 > 213. As such, this pixel value is detected as a pixel value that was adversely affected by a direct hit of pixel 301 by an X-ray photon during the exposure.

Next, the frame summing unit generates a single frame of which the pixel value for pixel 301 is computed by averaging the other pixel values for pixel 301, i.e. (202+204+196+210)/4=203.

In the embodiments in figure 5 and 6, the detected pixel value was discarded when computing the pixel value of the pixel. In other embodiments, the detected pixel value is replaced by the median value or the average value, respectively.

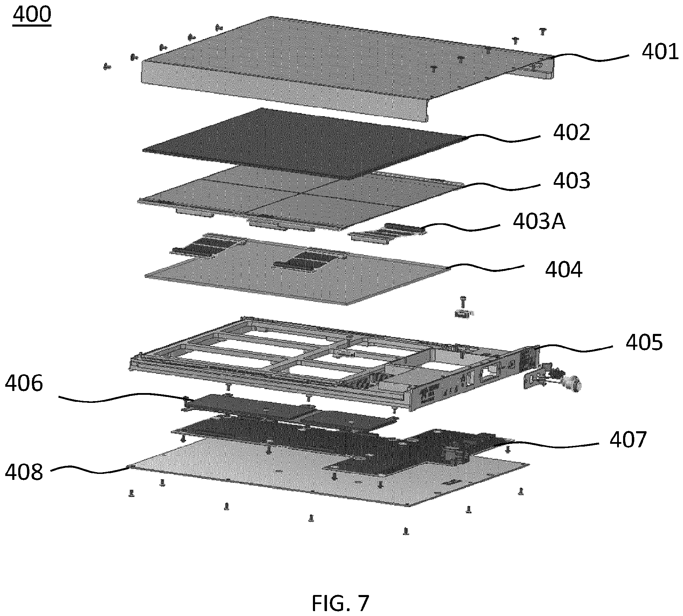

Figure 7 illustrates an exploded view of an X-ray detector 400 in accordance with an aspect of the present disclosure. It comprises a front cover 401, typically a carbon cover, and a back cover 408. A carrier 402 having a first surface and an opposing second surface is provided adjacent front cover 401. A scintillator is arranged on the first surface of carrier 402, which in figure 7 corresponds to the surface that is directed towards front cover 401. Carrier 402 may be a foil or another suitable carrier onto which the scintillator can be formed.

Adjacent carrier 402, four semiconductor tiles 403 are arranged that each comprise a CMOS pixel array. Tiles 403 are mounted on a supporting plate 404. On the other side, supporting plate 404 is connected to a metal frame 405 in which a printed circuit board 407 is arranged. Lead slabs 406 are provided to protect the electronics on printed circuit board 407 against X-ray radiation.

The frame summing unit described above can be realized on each of the tiles 403, where it will output subframes for the X-ray image to be constructed, or it can be realized on printed circuit board 407, will output an entire frame for the X-ray image to be constructed. In the former case, a dedicated subframe combining unit may be arranged on printed circuit board 407 that combines the various subframes received from the frame summing unit. The image generating unit may be provided separate from X-ray detector 400 and may for example be realized using a general purpose computer running image processing software. In other embodiments, the frame summing unit is also implemented using a general-purpose computer.

In the above, the present invention has been described using detailed embodiments thereof. However, the present invention is not limited to these embodiments. Instead, various modifications are possible without departing from the scope of the present invention which is defined by the appended claims.

Particular and preferred aspects of the invention are set out in the accompanying claims.

The term "comprising" does not exclude other elements or steps, the term "a" or "an" does not exclude a plurality. Reference signs in the claims shall not be construed as limiting the scope of the claims.

## Claims

1. An X-ray detecting system (120), comprising:
an X-ray detector comprising a pixel array (1211) and readout circuitry (1213) for reading out pixel signals of the pixel array, wherein the readout circuitry (1213) is configured for acquiring a plurality of frames (300A-300E) related to a single X-ray exposure, each frame (300A-300E) comprising pixel values for the pixels in the pixel array (1211); and
a processing unit (122) for processing the pixel signals, wherein the processing unit (122) comprises a frame summing unit (1221) and an X-ray image generating unit (1222);
wherein the frame summing unit (1221) is configured to, for each pixel of the pixel array:
compare the pixel values of the acquired frames (300A-300E) that correspond to that pixel for detecting a pixel value in those frames (300A-300E) that was adversely affected by a direct hit of that pixel by an X-ray photon during said single exposure; and
generate a pixel value for that pixel in dependence of the pixel values of the acquired frames (300A-300E), discarding the detected adversely affected pixel value for that pixel;
wherein the X-ray image generating unit (1222) is configured to generate an X-ray image based on the generated pixel values for the pixels of the pixel array; and
wherein the X-ray detecting system (120) does not comprise a fiber optic plate.

2. The X-ray detecting system (120) according to claim 1, wherein the frame summing unit (1221) is configured to detect the pixel value by determining, for that pixel, a median value of the pixel values of the acquired frames (300A-300E), and to determine that a pixel value among the pixel values of the acquired frames (300A-300E) is adversely affected if that pixel value deviates more than a first threshold from the determined median value.

3. The X-ray detecting system (120) according to claim 1, wherein the frame summing unit (1221) is configured to detect the pixel value by determining, for that pixel, an average value of the pixel values of the acquired frames (300A-300E), and to determine that a pixel value among the pixel values of the acquired frames (300A-300E) is adversely affected if that pixel value deviates more than a second threshold from the average value.

4. The X-ray detecting system (120) according to any of the previous claims, wherein the pixel array (1211) comprises active pixels, preferably pixels having a 3T or 4T layout, and/or wherein the pixel array comprises a CMOS pixel array, preferably on a Silicon substrate.

5. The X-ray detecting system (120) according to any of the previous claims, further comprising:
a carrier (402);
a scintillator arranged on the carrier (402);
a semiconductor substrate attached to the carrier (402) on which substrate the pixel array (1211) and the readout circuitry (1213) are integrated;
wherein the carrier (402) is preferably made of one or more materials out of the group consisting of aluminum, amorphous carbon, and other light flexible organic substrate such as Kapton or PET, wherein an absorption coefficient for X-ray radiation having an energy within a range between 20 and 150 keV preferably lies in a range between 0.01 and 4 cm2/mg.

6. The X-ray detecting system (120) according to any of the previous claims, wherein the frame summing unit (1221) is integrated on the semiconductor substrate.

7. An X-ray system (200), comprising:
an X-ray source (110); and
the X-ray detecting system (120) according to any of the previous claims.

8. The X-ray system (200) according to claim 7, wherein the pixels of the pixel array (1211) are active pixels that each have a storage capacity, wherein the X-ray system (200) is operable in a first operational mode in which mode the X-ray source (110) is configured to emit X-rays using a dose rate in a range between 0.01 and 10 mGy in a single exposure, wherein an integration time of the pixel array (1211) is such that a maximum filling level of the storage capacity stays between 1 and 50 percent during said single exposure and such that the number of acquired frames (300A-300E) exceeds 1, more preferably 4.

9. An X-ray detection method, comprising:
emitting X-rays to an object;
converting X-rays having passed through the object into visible light;
detecting the visible light using a pixel array by acquiring multiple frames (300A-300E) during a single X-ray exposure, wherein X-rays which have not passed through a fiber optic plate generate direct hits in the pixel array;
for each pixel of the pixel array, comparing pixel values of the acquired frames (300A-300E) that correspond to that pixel for detecting a pixel value in those frames (300A-300E) that was adversely affected by a direct hit of that pixel by an X-ray photon during said single exposure, and generating a pixel value for that pixel in dependence of the pixel values of the acquired frames (300A-300E), while discarding the detected adversely affected pixel value for that pixel;
generating an X-ray image based on the generated pixel values for the pixels of the pixel array.

10. The method according to claim 9, wherein said detecting said pixel value comprises determining, for that pixel, a median value of the pixel values of the acquired frames (300A-300E), and to determine that a pixel value among the pixel values of the acquired frames (300A-300E) is adversely affected if that pixel value deviates more than a first threshold from the determined median value.

11. The method according to claim 9, wherein said detecting said pixel value comprises determining, for that pixel, an average value of the pixel values of the acquired frames (300A-300E), and to determine that a pixel value among the pixel values of the acquired frames (300A-300E) is adversely affected if that pixel value deviates more than a second threshold from the determined average value.

## Patentansprüche

1. Ein Röntgendetektorsystem (120), aufweisend:
einen Röntgendetektor, mit einem Pixelarray (1211) und einer Ausleseschaltung (1213) zum Auslesen von Pixelsignalen des Pixelarrays, wobei die Ausleseschaltung (1213) so ausgebildet ist, dass sie eine Mehrzahl an sich auf eine einzelne Röntgenaufnahme beziehende Bilddatensätze (300A-300E) erfasst, wobei jeder Bilddatensatz (300A-300E) Pixelwerte für die Pixel in dem Pixelarray (1211) aufweist; und
eine Verarbeitungseinheit (122), zum Verarbeiten der Pixelsignale, mit (122) einer Bilddatensatz-Summiereinheit (1221) und einer Röntgenbild-Erzeugungseinheit (1222);
wobei die Bilddatensatz-Summiereinheit (1221) so ausgebildet ist, dass sie für jedes Pixel des Pixelarrays:
die diesem Pixel entsprechenden Pixelwerte der aufgenommenen Bilddatensätze (300A-300E) vergleicht, um in diesen Bilddatensätzen (300A-300E) einen Pixelwert zu erfassen, welcher durch einen direkten Treffer dieses Pixels durch ein Röntgenphoton während der Einzelbelichtung nachteilig beeinflusst wurde; und
in Abhängigkeit von den Pixelwerten der aufgenommenen Bilddatensätze (300A-300E) für dieses Pixel einen Pixelwert erzeugt, wobei der erfasste nachteilig beeinflusste Pixelwert für dieses Pixel nicht berücksichtigt wird;
wobei die Röntgenbild-Erzeugungseinheit (1222) so ausgebildet ist, dass sie auf der Grundlage der erzeugten Pixelwerte für die Pixel des Pixelarrays ein Röntgenbild erstellt; und
wobei das Röntgendetektorsystem (120) keine faseroptische Platte aufweist.

2. Das Röntgendetektorsystem (120) nach Anspruch 1, wobei die Bilddatensatz-Summiereinheit (1221) so ausgebildet ist, dass sie den Pixelwert dadurch erfasst, dass sie für dieses Pixel einen Medianwert der Pixelwerte der aufgenommenen Bilddatensätze (300A-300E) bestimmt, und dass sie bestimmt, dass unter den Pixelwerten der aufgenommenen Bilddatensätze (300A-300E) ein Pixelwert nachteilig beeinflusst wurde, wenn dieser Pixelwert von dem bestimmten Medianwert um mehr als einen ersten Schwellenwert abweicht.

3. Das Röntgendetektorsystem (120) nach Anspruch 1, wobei die Bilddatensatz-Summiereinheit (1221) so ausgebildet ist, dass sie den Pixelwert dadurch erfasst, dass sie für dieses Pixel einen Durchschnittswert der Pixelwerte der aufgenommenen Bilddatensätze (300A-300E) bestimmt, und dass sie bestimmt, dass unter den Pixelwerten der aufgenommenen Bilddatensätze (300A-300E) ein Pixelwert nachteilig beeinflusst wurde, wenn dieser Pixelwert von dem Durchschnittswert um mehr als einen zweiten Schwellenwert abweicht.

4. Das Röntgendetektorsystem (120) nach einem der vorherigen Ansprüche, wobei das Pixelarray (1211) aktive Pixel aufweist, vorzugsweise Pixel mit einem 3T- oder 4T-Layout, und/oder wobei das Pixelarray als CMOS-Pixelarray ausgebildet ist, vorzugsweise auf einem Siliziumsubstrat.

5. Das Röntgendetektorsystem (120) nach einem der vorherigen Ansprüche, ferner aufweisend:
einen Träger (402);
einen auf dem Träger (402) angeordneten Szintillator;
ein an dem Träger (402) befestigtes Halbleitersubstrat, wobei das Pixelarray (1211) und die Ausleseschaltung (1213) auf dem Substrat integriert sind;
wobei der Träger (402) vorzugsweise aus einem oder mehreren Materialien der Gruppe bestehend aus Aluminium, amorphem Kohlenstoff und anderen leicht flexiblen organischen Substraten wie Kapton oder PET, hergestellt ist,
und vorzugsweise einen Absorptionskoeffizienten aufweist, der für Röntgenstrahlung mit einer Energie innerhalb 20 und 150 keV in einem Bereich zwischen 0,01 und 4 cm²/mg liegt.

6. Das Röntgendetektorsystem (120) nach einem der vorherigen Ansprüche, wobei die Bilddatensatz-Summiereinheit (1221) auf dem Halbleitersubstrat integriert ist.

7. Ein Röntgensystem (200), aufweisend:
eine Röntgenquelle (110); und
das Röntgendetektorsystem (120) nach einem der vorherigen Ansprüche.

8. Das Röntgensystem (200) nach Anspruch 7, wobei die Pixel des Pixelarrays (1211) aktive, jeweils eine Speicherkapazität aufweisende Pixel sind, wobei das Röntgensystem (200) in einem ersten Betriebsmodus betrieben werden kann, in dem die Röntgenquelle (110) so ausgebildet ist, dass sie bei Einzelbelichtung Röntgenstrahlen mit einer Dosisleistung in einem Bereich zwischen 0,01 und 10 mGy emittiert, mit einer Integrationszeit des Pixelarrays (1211) derart, dass ein maximaler Füllgrad der Speicherkapazität während der Einzelbelichtung zwischen 1 und 50 Prozent verbleibt, und derart, dass zumindest zwei, vorzugsweise zumindest fünf Bilddatensätze (300A-300E) aufgenommen werden.

9. Ein Röntgen-Aufnahmeverfahren, aufweisend die folgenden Schritte:
Aussenden von Röntgenstrahlen auf ein Objekt;
Umwandeln von das Objekt durchdrungenen Röntgenstrahlen in sichtbares Licht;
Erfassen, unter Verwendung eines Pixelarrays, des sichtbaren Lichts durch Aufnehmen mehrerer Bilddatensätze (300A300E) während einer einzigen Röntgenaufnahme, wobei Röntgenstrahlen, die nicht durch eine faseroptische Platte hindurchgegangen sind, in dem Pixelarray direkte Treffer erzeugen;
für jedes Pixel des Pixelarrays, Vergleichen von Pixelwerten der aufgenommenen, diesem Pixel entsprechenden Bilddatensätze (300A-300E), um während der Einzelbelichtung in diesen Bilddatensätzen (300A-300E) einen Pixelwert zu erfassen, der durch einen direkten Treffer dieses Pixels durch ein Röntgenphoton nachteilig beeinflusst wurde, und
Erzeugen eines Pixelwertes für dieses Pixel in Abhängigkeit der Pixelwerte der aufgenommenen Bilddatensätze (300A-300E), wobei der erfasste nachteilig beeinflusste Pixelwert für dieses Pixel nicht berücksichtigt wird;
Erstellen eines Röntgenbildes auf der Grundlage der erzeugten Pixelwerte für die Pixel des Pixelarrays.

10. Das Verfahren nach Anspruch 9, wobei das Erfassen des Pixelwertes das Bestimmen eines Medianwertes der Pixelwerte der aufgenommenen Bilddatensätze (300A-300E) für dieses Pixel umfasst, und das Bestimmen, dass ein Pixelwert unter den Pixelwerten der aufgenommenen Bilddatensätze (300A-300E) nachteilig beeinflusst wurde, wenn dieser Pixelwert um mehr als einen ersten Schwellenwert von dem bestimmten Medianwert abweicht.

11. Das Verfahren nach Anspruch 9, wobei das Erfassen des Pixelwertes das Bestimmen eines Durchschnittswertes der Pixelwerte der aufgenommenen Bilddatensätze (300A-300E) für dieses Pixel umfasst, und das Bestimmen, dass ein Pixelwert unter den Pixelwerten der aufgenommenen Bilddatensätze (300A-300E) nachteilig beeinflusst wurde, wenn dieser Pixelwert um mehr als einen zweiten Schwellenwert von dem bestimmten Durchschnittswert abweicht.

## Revendications

1. Système de détection de rayons X (120), comprenant :
un détecteur de rayons X comprenant un réseau de pixels (1211) et un circuit de lecture (1213) pour lire des signaux de pixel du réseau de pixels, dans lequel le circuit de lecture (1213) est configuré pour acquérir une pluralité de trames (300A-300E) associées à une exposition aux rayons X unique, chaque trame (300A-300E) comprenant des valeurs de pixel pour les pixels dans le réseau de pixels (1211) ; et
une unité de traitement (122) pour traiter les signaux de pixel, dans lequel l'unité de traitement (122) comprend une unité de sommation de trames (1221) et une unité de génération d'image radiologique (1222) ;
dans lequel l'unité de sommation de trames (1221) est configurée pour, pour chaque pixel du réseau de pixels :
comparer les valeurs de pixel des trames (300A-300E) acquises qui correspondent à ce pixel pour détecter une valeur de pixel dans ces trames (300A-300E) qui a été affectée négativement par une frappe directe de ce pixel par un photon de rayons X pendant ladite exposition unique ; et
générer une valeur de pixel pour ce pixel en fonction des valeurs de pixel des trames (300A-300E) acquises, en rejetant la valeur de pixel affectée négativement détectée pour ce pixel ;
dans lequel l'unité de génération d'image radiologique (1222) est configurée pour générer une image radiologique sur la base des valeurs de pixel générées pour les pixels du réseau de pixels ; et
dans lequel le système de détection de rayons X (120) ne comprend pas de plaque à fibre optique.

2. Système de détection de rayons X (120) selon la revendication 1, dans lequel l'unité de sommation de trames (1221) est configurée pour détecter la valeur de pixel en déterminant, pour ce pixel, une valeur médiane des valeurs de pixel des trames (300A-300E) acquises, et pour déterminer qu'une valeur de pixel parmi les valeurs de pixel des trames (300A-300E) acquises est affectée négativement si l'écart entre cette valeur de pixel et la valeur médiane déterminée dépasse un premier seuil.

3. Système de détection de rayons X (120) selon la revendication 1, dans lequel l'unité de sommation de trames (1221) est configurée pour détecter la valeur de pixel en déterminant, pour ce pixel, une valeur moyenne des valeurs de pixel des trames (300A-300E) acquises, et pour déterminer qu'une valeur de pixel parmi les valeurs de pixel des trames (300A-300E) acquises est affectée négativement si l'écart entre cette valeur de pixel et la valeur moyenne dépasse un deuxième seuil.

4. Système de détection de rayons X (120) selon l'une quelconque des revendications précédentes, dans lequel le réseau de pixels (1211) comprend des pixels actifs, de préférence des pixels ayant une architecture 3T ou 4T, et/ou dans lequel le réseau de pixels comprend un réseau de pixels CMOS, de préférence sur un substrat de silicium.

5. Système de détection de rayons X (120) selon l'une quelconque des revendications précédentes, comprenant en outre :
un support (402) ;
un scintillateur agencé sur le support (402) ;
un substrat semi-conducteur fixé au support (402), le réseau de pixels (1211) et le circuit de lecture (1213) étant intégrés sur le substrat ;
dans lequel le support (402) est constitué de préférence d'un ou de plusieurs matériaux choisis dans le groupe constitué par l'aluminium, un carbone amorphe et un autre substrat organique flexible léger tel que le Kapton ou le PET, dans lequel un coefficient d'absorption pour le rayonnement radiologique ayant une énergie dans une plage comprise entre 20 et 150 keV se situe de préférence dans une plage comprise entre 0,01 et 4 cm2/mg.

6. Système de détection de rayons X (120) selon l'une quelconque des revendications précédentes, dans lequel l'unité de sommation de trames (1221) est intégrée sur le substrat semi-conducteur.

7. Système de rayons X (200) comprenant :
une source de rayons X (110) ; et
le système de détection de rayons X (120) selon l'une quelconque des revendications précédentes.

8. Système de rayons X (200) selon la revendication 7, dans lequel les pixels du réseau de pixels (1211) sont des pixels actifs qui ont chacun une capacité de stockage, dans lequel le système de rayons X (200) peut fonctionner dans un premier mode de fonctionnement dans lequel la source de rayons X (110) est configurée pour émettre des rayons X en utilisant un débit de dose dans une plage comprise entre 0,01 et 10 mGy lors d'une exposition unique, dans lequel un temps d'intégration du réseau de pixels (1211) est tel qu'un niveau de remplissage maximal de la capacité de stockage reste compris entre 1 et 50 pour cent au cours de ladite exposition et tel que le nombre de trames (300A-300E) acquises dépasse 1, de préférence 4.

9. Procédé de détection de rayons X, comprenant :
l'émission de rayons X en direction d'un objet,
la conversion des rayons X ayant passé à travers l'objet en lumière visible ;
la détection de la lumière visible en utilisant un réseau de pixels en acquérant plusieurs trames (300A-300E) au cours d'une exposition unique aux rayons X, dans lequel les rayons X qui n'ont pas passé à travers une plaque à fibre optique génèrent des frappes directes sur le réseau de pixels ;
pour chaque pixel du réseau de pixels, la comparaison des valeurs de pixel des trames (300A-300E) acquises qui correspondent à ce pixel pour détecter une valeur de pixel dans ces trames (300A-300E) qui a été affectée négativement par une frappe directe de ce pixel par un photon de rayons X au cours de ladite exposition unique,
et la génération d'une valeur de pixel pour ce pixel en fonction des valeurs de pixel des trames (300A-300E) acquises, tout en rejetant la valeur de pixel affectée négativement détectée pour ce pixel ;
la génération d'une image radiologique sur la base des valeurs de pixel générées pour les pixels du réseau de pixels.

10. Procédé selon la revendication 9, dans lequel ladite détection de ladite valeur de pixel comprend la détermination, pour ce pixel, d'une valeur médiane des valeurs de pixel des trames (300A-300E) acquises, et le fait de déterminer qu'une valeur de pixel parmi les valeurs de pixel des trames (300A-300E) acquises est affectée négativement si l'écart entre cette valeur de pixel et la valeur médiane déterminée dépasse un premier seuil.

11. Procédé selon la revendication 9, dans lequel ladite détection de ladite valeur de pixel comprend la détermination, pour ce pixel, d'une valeur moyenne des valeurs de pixel des trames (300A-300E) acquises, et le fait de déterminer qu'une valeur de pixel parmi les valeurs de pixel des trames (300A-300E) acquises est affectée négativement si l'écart entre cette valeur de pixel et la valeur moyenne déterminée dépasse un deuxième seuil.
